# EUROPEAN PATENT APPLICATION

(11) **EP 2 223 849 A2**
(43) Date of publication of application: **01.09.2010**
(21) Application number: 10150394.4
(22) Date of filing: 11.01.2010
(51) Int. Cl.: B62K 19/46

(54) **Storage chamber for a scooter type motorcycle**

(30) Priority: 26.02.2009 TW 98106149
(71) Applicant: Kwang Yang Motor Co., Ltd., Kaohsiung City (TW)
(72) Inventor: Wang, I-Jung, Cambridge, CB1 1AH (GB); Lin, Tsang-Mao, Cambridge, CB1 1AH (GB)
(74) Representative: Horak, Michael

(57) **Abstract**

A storage chamber (4) is provided for a scooter motorcycle (3). The storage chamber (4) includes an upper cover (41) and a chamber body (42). The upper cover (41) is set on the chamber body (42), and the upper cover (41) has a front portion forming an opening (411) and a rear portion forming a shielding section (412). The chamber body (42) is in the form of a container having a closed bottom. The chamber body (42) forms a raised section (421) corresponding to a cross bar (318) of a frame (31) of the scooter (3). The raised section (421) delimits a front compartment (420) and a rear compartment (42b) inside the chamber body (42). The rear compartment (42b) extends rearward from the raised section (421) in an upward inclined manner. Thus, even though the rear compartment (42b) is covered by a shielding section (412), access of objects accommodated inside the rear compartment (42b) is still easy and convenient. As such, efficacy of use of the storage chamber (4) is enhanced.

## Description

### (a) Technical Field of the Invention

The present invention generally relates to a storage chamber of a scooter motorcycle, and more particularly to a structure that helps improving the efficacy of use of the storage chamber of scooter motorcycle.

### (b) Description of the Prior Art

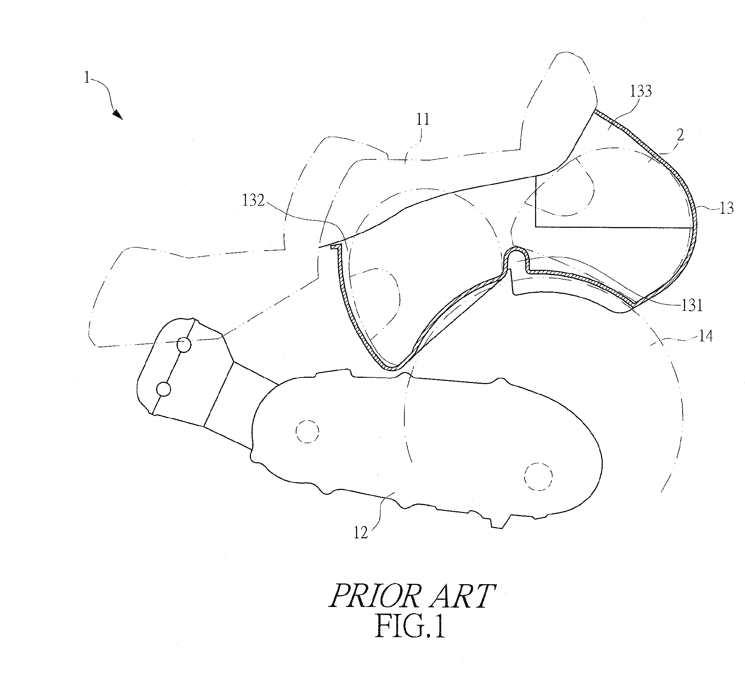

For a scooter motorcycle of the so-called two-wheeled vehicles, the scooter motorcycle, generally designated at 1 in FIG. 1 of the attached drawings, at least comprises a seat cushion 11 and a power unit 12, between which a storage chamber 13 is formed.

The storage chamber 13 is generally constructed as shown in FIG. 1. To accommodate helmets 2 for a rider and a passenger of the scooter motorcycle 1 in the storage chamber 13, conventionally, the storage chamber 13 of scooter motorcycle is constructed in such a way to fit the curved contour of a rear wheel 14 so that a raised portion 131 is formed on a bottom of the storage chamber 13 at a location approximately at a middle thereof to show a configuration of an inverted V-shape. Thus, the storage chamber 13 is formed to provide a front compartment 132 and a rear compartment 133 therein for receiving two helmets 2. However, in such a conventional storage chamber 13 of scooter motorcycle, the front compartment 132 and the rear compartment 133 are arranged to have opposite ends extending substantially downward in a vertical direction. When small objects are placed in the storage chamber 13, such small objects may get accumulated and stacked at locations close to the opposite ends of the front compartment 132 and the rear compartment 133, making it difficult to find out and access these small objects.

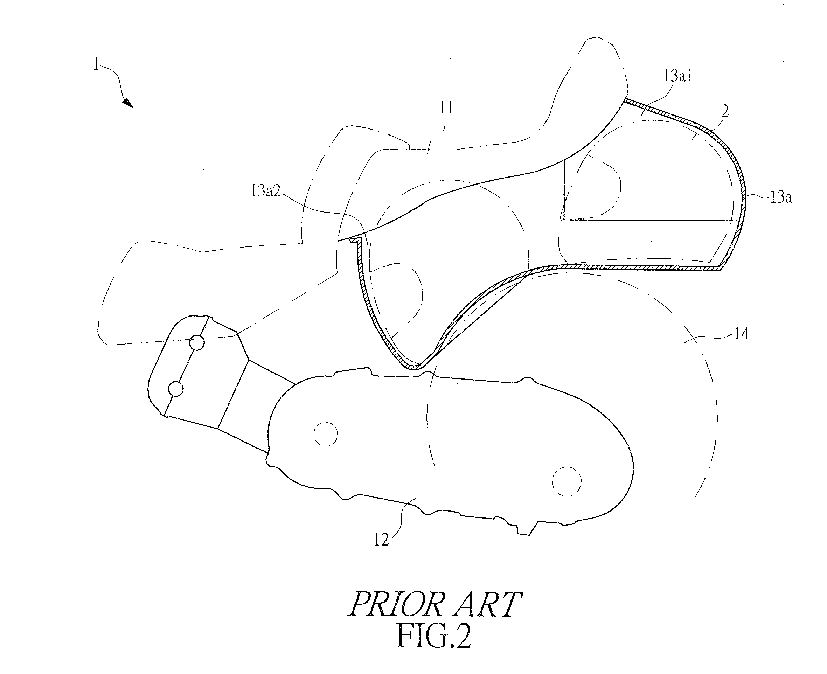

To solve such a problem of the above discussed storage chamber 13, a modified structure of storage chamber, generally designated at 13a of FIG. 2 is available. The storage chamber 13a also forms a front compartment 13a1 and a rear compartment 13a2, but the rear compartment 13a2 is set to extend rearward, rather than downward, so that the previously discussed problem that is caused by downward extension of rear compartment is overcome. However, such a structure of storage chamber 13a allows objects accommodated in the rear compartment 13a2 to move quickly forward to hit the front compartment 13a1 when the scooter is decelerated or takes an emergency stop, so as to cause potential risk of damaging the objects accommodated in both the front compartment 13a1 and the rear compartment 13a2. Thus, it is a challenge of the industry to provide a structure of storage chamber that allows objects accommodated in a front compartment and a rear compartment of the storage chamber to be easily accessible and prevent the objects from hitting and damaging each other.

### SUMMARY OF THE INVENTION

To overcome the drawbacks of a conventional storage chamber for scooter motorcycle, an object of the present invention is to provide a structure of storage chamber of scooter motorcycle that enhances the efficacy of use of the storage chamber of scooter motorcycle.

To achieve the above object, the technical solution of the present invention comprises a storage chamber of scooter motorcycle, which comprises an upper cover and a chamber body. The upper cover is set on the chamber body, and the upper cover has a front portion forming an opening and a rear portion forming a shielding section. The chamber body is in the form of a container having a closed bottom. The chamber body forms a raised section corresponding to a cross bar of a frame of the scooter. The raised section delimits a front compartment and a rear compartment inside the chamber body. The rear compartment extends rearward from the raised section in an upward inclined manner. Thus, even though the rear compartment is covered by a shielding section, access of objects accommodated inside the rear compartment is still easy and convenient. As such, efficacy of use of the storage chamber is enhanced.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a schematic view showing a conventional storage chamber of a scooter motorcycle.
FIG. 2 is a schematic view showing another conventional storage chamber of a scooter motorcycle.
FIG. 3 is a side elevational view of a scooter motorcycle according to the present invention.
FIG. 4 is an exploded view of a storage chamber and a vehicle frame of a scooter motorcycle according to the present invention.
FIG. 5 is a schematic side elevational view of a storage chamber of scooter motorcycle according to the present invention.
FIG. 6 is a schematic top plan view of the storage chamber according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

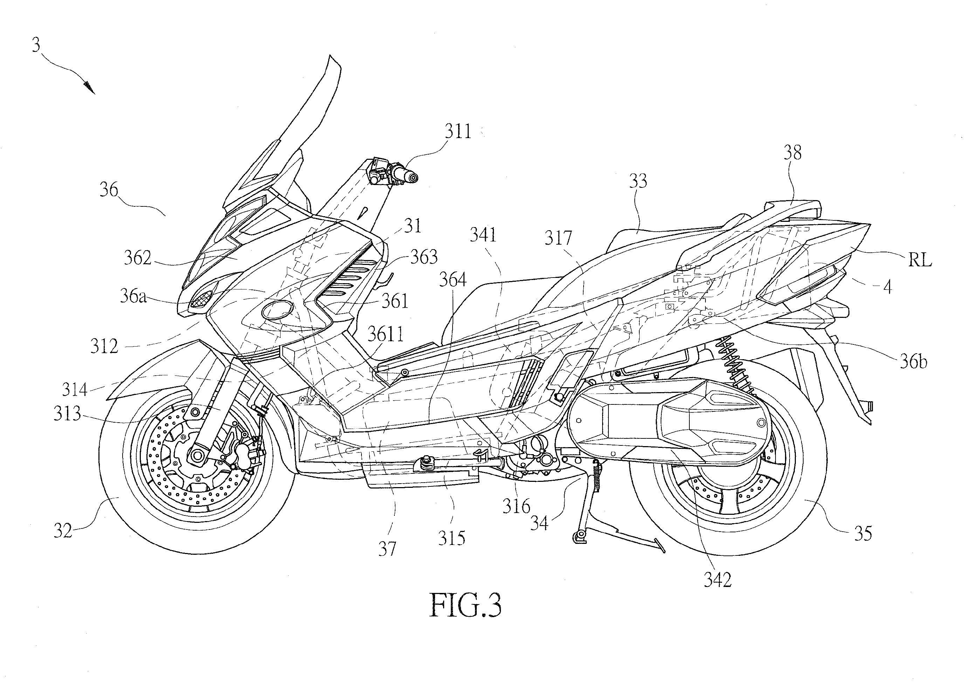

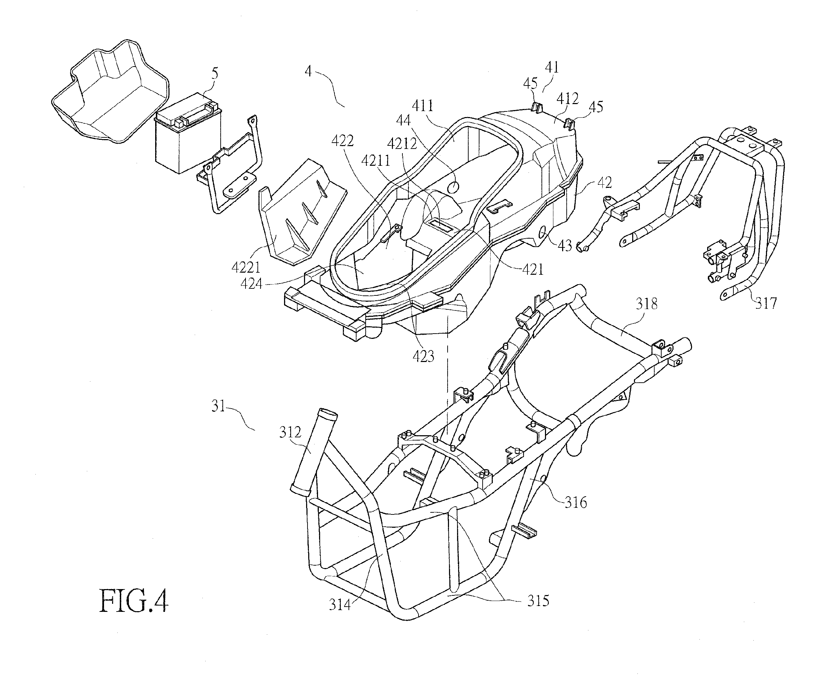

Referring to FIGS. 3 and 4, the present invention provides a scooter motorcycle, generally designated at 3. The scooter motorcycle 3 comprises a vehicle frame 31, a front wheel 32, a seat cushion 33, a power unit 34, a rear wheel 35, and a vehicle covering 36.

The frame 31 pivotally supports a handlebar 311 in a front end thereof. The handlebar 311 is coupled, at a lower side thereof, to a head tube 312.

The head tube 312 has a lower portion pivotally coupled to a front shock absorber 313. The front shock absorber 313 rotatably supports the front wheel 32. The head tube 312 extends rearward of the vehicle body to form a downward-extending tube section 314. The downward-extending tube section 314 is further extended rearward of opposite sides of the vehicle body to form a horizontal tube section 315 that supports thereon front foot rests 364. The horizontal tube section 315 is extended rearward of the vehicle body to form an upward-extending tube section 316. The upward-extending tube section 316 is extended rearward of the vehicle body to form a rear frame section 317. A cross bar 318 is set in front of the rear frame section 317.

The frame 31 comprises a seat cushion 33 arranged on the upward-extending tube section 316 and the rear frame section 317 to support a rider sitting thereon. A storage chamber 4 is formed below the seat cushion 33. A fuel tank 37 is provided in front of the storage chamber 4 between the front foot rests 364. The power unit 34 is arranged below the storage chamber 4 and the power unit 34 is coupled to the rear wheel 35.

The power unit 34 comprises at least an injection engine 341 and a transmission box 342.

The covering 36 comprises a front covering shell 36a located at a front end of the scooter 3 and side covering shells 36b. The front covering shell 36a is composed of a knee shielding hood 361 and a front panel 362. The knee shielding hood 361 forms a front storage chamber 363 in a direction toward the rear of the vehicle body. The knee shielding hood 361 is extended downward to form a foot support 3611, and the foot support 3611 is coupled, in a direction toward the rear side of the vehicle body, to the foot rest 364. The side covering shells 36b have a rear end to which a taillight assembly RL and a rear rack 38 are mounted.

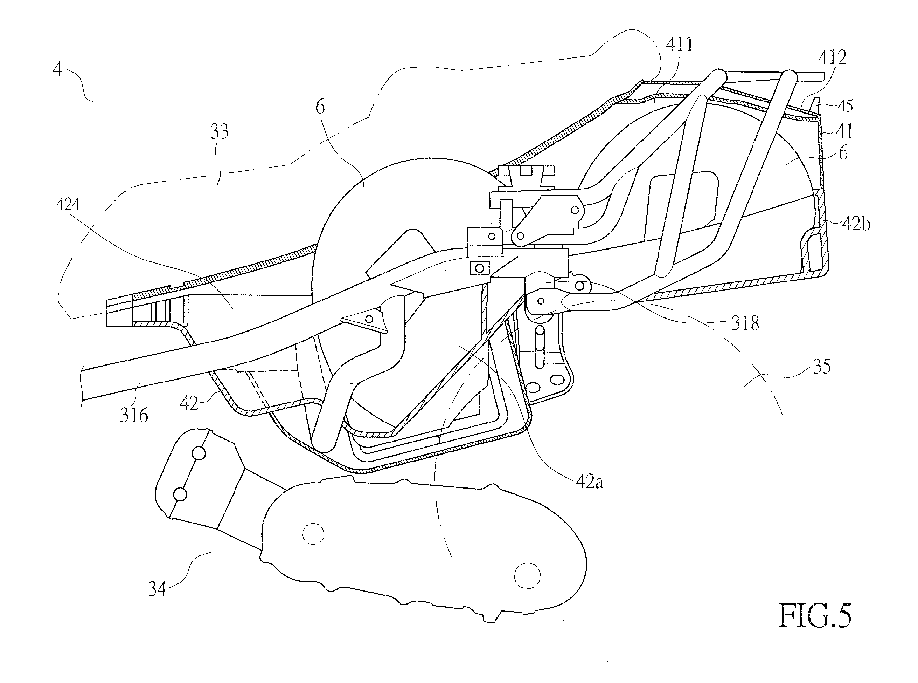

Referring to FIGS. 4-6, the storage chamber 4 according to the present invention comprises an upper cover 41 and a chamber body 42.

The upper cover 41 has a shape corresponding to the chamber body 42 and is set on the chamber body 42. The upper cover 41 has a front portion forming an opening 411. The seat cushion 33 is sized and positioned to exactly cover the opening 411 of the upper cover 41. The upper cover 41 has a rear portion forming a shielding section 412. The shielding section 412 has a rear portion on which a pair of controller locking seats 45 is formed. The controller locking seats 45 function to lock and secure electronic controllers or the likes thereon.

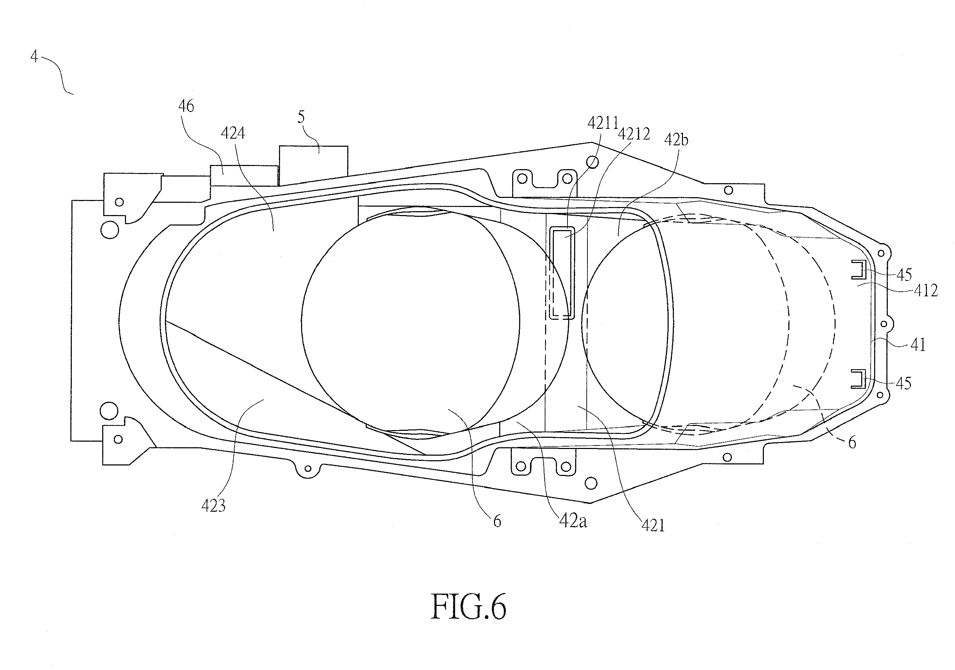

The chamber body 42 is in the form of a container having a bottom that is closed for receiving and accommodating objects therein. The chamber body 42 forms a raised section 421 corresponding to the cross bar 318 of the frame 31. The raised section 421 forms thereon an open slot 4211, to which a lid 4212 is provided. The open slot 4211 formed in the raised section 421 allows for visual inspection of a vehicle frame identification code formed on the cross bar 318. The chamber body 42 uses the raised section 421 to delimit a front compartment 42a and a rear compartment 42b. The rear compartment 42b extends rearward from the raised section 421 in an upward inclined manner. Particularly, the rear compartment 42b extends rearward in an inclined manner with an elevation angle of for example 5 degrees, so that helmets 6 for a rider and a passenger can be respectively positioned in the front compartment 42a and the rear compartment 42b. The front compartment 42a of the chamber body 42 has a side wall in which a battery maintenance opening 422 is formed. The battery maintenance opening 422 is removably covered by a lid 4221, whereby maintenance operation of a battery 5 of the scooter can be carried out through the battery maintenance opening 422. The front compartment 42a of the chamber body 42 has a front wall that projects toward the raised section 421 to form a front projection 423. The front projection 423 helps providing enhanced positioning of objects inside the front compartment 42a. A secondary storage compartment 424 is formed on a right side of the front projection 423 and the secondary storage compartment 424 functions to receive and store small objects therein. Also referring to FIGS. 4 and 6, the chamber body 42 forms a lighting device 43 and an electrical charging device 44 in walls of a rear portion thereof. The lighting device 42 helps search and access of objects stored in the storage chamber 4. The electrical charging device 44 provides a power source for charging portable electric appliances carried by the rider. A fuse box 46 is provided outside the front end of chamber body 42 and the fuse box 46 accommodates fuses for supplying electrical power to the electric devices of the scooter.

The efficacy of the present invention is that with the structure of the storage chamber 4 discussed above, the open slot 4211 formed in the raised section 421 allows for efficient inspection of the vehicle frame identification code formed on the cross bar 318 for identification of the vehicle. Further, the upward inclined extension of the rear compartment 42b from the raised section 421 provides the storage chamber 4 such an inclined configuration that is lowered in the front side, but raised in the rear side and thus, even the rear compartment 42b is provided thereon the shielding section 412, access to the objects accommodated inside the rear compartment 42b is still easy and convenient. The raised section 421 provides a barrier that prevents the objects accommodated in the rear compartment 42b from colliding into the front compartment 42a and thus ensuring improved positioning effect of the objects inside the rear compartment 42b. Further, the front projection 423 arranged on the front side of the front compartment 42a provides enhanced positioning effect for objects accommodated in the front compartment 42a.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A storage chamber for a scooter motorcycle that comprises a frame on which the storage chamber is formed, the storage chamber comprising an upper cover and a chamber body, **characterized in that**:
the upper cover is set on the chamber body, the upper cover having a rear portion forming a shielding section; and
the chamber body is in the form of a container, the chamber body forming a raised section corresponding to a cross bar of the frame, the raised section delimiting a front compartment and a rear compartment inside the chamber body, the rear compartment extending rearward from the raised section in an upward inclined manner.

2. The storage chamber according to claim 1, wherein the raised section forms an open slot, the open slot being provided with a lid.

3. The storage chamber according to claim 1, wherein the front compartment of the storage chamber forms a maintenance opening, the maintenance opening being removably covered by a lid.

4. The storage chamber according to claim 1, wherein the front compartment of the storage chamber has a front end that forms a front projection.

5. The storage chamber according to claim 1, wherein the rear compartment of the storage chamber extend rearward from the raised section in an upward inclined manner with a small inclination angle.

6. The storage chamber according to claim 4, wherein the front projection of the storage chamber forms on a right side thereof a secondary storage compartment.

7. The storage chamber according to claim 1, wherein the storage chamber has walls which form thereon a lighting device and an electrical charging device.

8. The storage chamber according to claim 1, wherein the storage chamber has a rear portion on which a controller locking seat is formed.

9. The storage chamber according to claim 1, wherein the chamber body the storage chamber forms outside a front end thereof a fuse box.
